# EUROPEAN PATENT APPLICATION

(11) **EP 3 165 999 A1**
(43) Date of publication of application: **10.05.2017**
(21) Application number: 14888878.7
(22) Date of filing: 15.08.2014
(51) Int. Cl.: G06F 3/041

(54) **TOUCH SCREEN CONTACT PROCESSING METHOD AND DEVICE, AND TERMINAL**

(30) Priority: 04.07.2014 CN 201410318611
(71) Applicant: ZTE Corporation, Shenzhen, Guangdong 518057 (CN)
(72) Inventor: HAO, Zhijian, Shenzhen Guangdong 518057 (CN); TONG, Xiangjie, Shenzhen Guangdong 518057 (CN)
(74) Representative: HGF Limited
(86) International application number: PCT/CN2014/084566
(87) International publication number: WO 2015/154362

(57) **Abstract**

The embodiment of the present invention provides a processing method and device for a touch point on a touch screen, and a terminal. The method includes that: touch point 1 on the touch screen is detected; an operation on the touch screen is determined to be a slide from touch point 1 to touch point 2, herein a distance between touch point 2 and touch point 1 exceeds a first predetermined threshold value; and one or more touch points 3 positioned on a slide path from touch point 1 to touch point 2 are reported, herein a distance/distances between the touch point/points 3 and touch point 1 is/are smaller than the first predetermined threshold value. According to the embodiment of the present invention, a shake point which is generated due to non-actual-touch can be effectively filtered; and moreover, when touch point 2 outside an anti-shake range is detected, the touch points on a slide trajectory between touch point 1 and touch point 2 are sequentially reported, and a generated touch point which is not on the slide trajectory will not be reported again, so that smooth transition from touch point 1 to touch point 2 is implemented, and user experiences are effectively improved.

## Description

### Technical Field

The present invention relates to the field of communication, and more particularly to a processing method and device for a touch point on a touch screen, and a terminal.

### Background

A touch screen is a transparent medium attached to a surface of a display. At present, there mainly are a few types of touch screens, which respectively are: a resistance type, a surface capacitance type, an inductive capacitance type, a surface acoustic wave type, an infrared type and the like. Herein a capacitance type touch screen is applied more widely, and mainly involves communication and consumer electronics, such as: a smart phone, a mobile phone, a multimedia player, a PAD and the like. A capacitance type touch screen judges a touch point by inducing a change of the capacitance generated by a touch of a human body. The capacitance type touch screen has two groups of signal lines: a drive line and an induction line, herein the drive line sends a signal, and the induction line senses a change of a capacitance value. When a finger touches a metal layer, the finger and a surface of the touch screen form a coupling capacitance due to the existence of an electric field of the human body. The capacitance is a conductor for a high-frequency current, so the finger attracts away a tiny current from the touch point to cause an impact on coupling between two electrodes near the touch point, thereby changing a capacitance between the two electrodes. When a magnitude of a mutual capacitance is detected, electrodes in a direction of the drive line sequentially send excitation signals, and all electrodes in a direction of the induction line simultaneously receive the signals, so that changes of capacitance values of all transverse and longitudinal electrode intersections, i.e. magnitudes of capacitances of a two-dimensional plane of the whole touch screen, may be obtained. Coordinates of each touch point may be calculated according to variation data of two-dimensional capacitances of the touch screen. Therefore, even though there are multiple touch points on the screen, real coordinates of each touch point can be calculated.

In recent years, along with progress of a handheld touch screen mobile communication terminal technology, users of handheld touch screen mobile communication terminals increase gradually. According to a working principle of the touch screen, a charger, a Liquid Crystal Display LCD and the like all may produce certain interference to the touch screen. In addition, a low-end touch screen per se has a relatively poor anti-interference capability, so that shake may be generated during touching, and user experiences are seriously impacted.

### Summary of the Invention

The embodiment of the present invention provides a processing method and device for a touch point on a touch screen, and a terminal to at least solve the problem of poor user experiences caused by an impacted touch effect due to easiness of interference to the touch screen, easiness of shake generated by touching the touch screen and jumps between touch points.

On one aspect of the present invention, a processing method for a touch point on a touch screen is provided. The processing method includes that: touch point 1 on the touch screen is detected; an operation on the touch screen is determined to be a slide from the touch point 1 to touch point 2, herein a distance between the touch point 2 and the touch point 1 exceeds a first predetermined threshold value; and one or more touch points 3 positioned on a slide path from the touch point 1 to the touch point 2 are reported, herein a distance/distances between the touch point/points 3 and touch point 1 is/are smaller than the first predetermined threshold value.

Alternatively, the step that the operation on the touch screen is determined to be the slide from the touch point 1 to touch point 2 includes that: whether a distance/distances between one or more touch points after the touch point 1 and the touch point 1 exceeds/exceeds the first predetermined threshold value is sequentially judged; and the one or more touch points are sequentially stored when a judgment result is NO, and when the distance between a first touch point and touch point 1 is judged to exceed the first predetermined threshold value, the first touch point is determined to be the touch point 2, and the operation on the touch screen is determined to be the slide from the touch point 1 to the touch point 2.

Alternatively, the step that one or more touch points 3 positioned on the slide path from the touch point 1 to the touch point 2 are reported includes that: the one or more touch points 3 are determined from the one or more touch points which are sequentially stored according to the slide path from touch point 1 to touch point 2; and the determined one or more touch points 3 are sequentially reported.

Alternatively, after the step that the operation on the touch screen is determined to be the slide from the touch point 1 to the touch point 2, the method further includes that: a judgment about whether a distance between a touch point after the touch point 2 and the touch point 1 exceeds the first predetermined threshold value is stopped.

Alternatively, after the step that the operation on the touch screen is determined to be the slide from the touch point 1 to the touch point 2, the method further includes that: one or more touch points which are detected after the touch point 2 are sequentially stored; whether a number of the stored touch points reaches a predetermined number N is judged; whether a distance between a last touch point and a first touch point in the N stored touch points is smaller than a second predetermined threshold value is judged under a condition that a judgment result is YES; and it is determined that the slide is stopped at the Nth stored touch point under a condition that the distance is smaller than the second predetermined threshold value.

Alternatively, under the condition that the distance between the last touch point and the first touch point in the N stored touch points is judged to be not smaller than the second predetermined threshold value, the method further includes that: the N stored touch points are updated, herein N updated touch points are formed by covering the first touch point in the N stored touch points by sequential shift at first and then adding a touch point generated after the Nth touch point; and whether a distance between the Nth touch point and the first touch point in the N updated touch points is smaller than the second predetermined threshold value is repeatedly judged, and it is determined that the slide operation is stopped when the distance is judged to be smaller than the second predetermined threshold value.

On another aspect of the present invention, a processing device for a touch point on a touch screen is provided. The processing device includes: a detection module, arranged to detect touch point 1 on the touch screen; a determination module, arranged to determine an operation on the touch screen to be a slide from the touch point 1 to touch point 2, herein a distance between the touch point 2 and the touch point 1 exceeds a first predetermined threshold value; and a reporting module, arranged to report one or more touch points 3 positioned on a slide path from the touch point 1 to the touch point 2, herein a distance/distances between the touch point/points 3 and the touch point 1 is smaller than the first predetermined threshold value.

Alternatively, the determination module includes: a judgment unit, arranged to sequentially judge whether a distance/distances between one or more touch points after the touch point 1 and the touch point 1 exceeds/exceeds the first predetermined threshold value; and a first determination unit, arranged to sequentially store the one or more touch points when a judgment result is NO, and when the distance between a first touch point and the touch point 1 is judged to exceed the first predetermined threshold value, determine the first touch point to be the touch point 2, and determine the operation on the touch screen to be the slide from the touch point 1 to the touch point 2.

Alternatively, the reporting module includes: a second determination unit, arranged to determine the one or more touch points 3 from the one or more touch points which are sequentially stored according to the slide path from the touch point 1 to the touch point 2; and a reporting unit, arranged to sequentially report the determined one or more touch points 3.

Alternatively, the determination module further includes: a stopping unit, arranged to stop a judgment about whether a distance between a touch point after the touch point 2 and the touch point 1 exceeds the first predetermined threshold value.

Alternatively, the device further includes: a storage module, arranged to sequentially store one or more touch points which are detected after the touch point 2; a first judgment module, arranged to judge whether a number of the stored touch points reaches a predetermined number N; a second judgment module, arranged to judge whether a distance between a last touch point and a first touch point in the N stored touch points is smaller than a second predetermined threshold value under the condition that a judgment result of the first judgment module is YES; and a second determination module, arranged to determine that the slide is stopped at the Nth stored touch point under the condition that a judgment result of the second judgment module indicates that the distance is smaller than the second predetermined threshold value.

Alternatively, the device further includes: an updating module, arranged to, under the condition that the distance between the last touch point and the first touch point in the N stored touch points is judged to be not smaller than the second predetermined threshold value, update the N stored touch points, herein N updated touch points are formed by covering the first touch point in the N stored touch points by cyclic shift at first and then adding a touch point generated after the Nth touch point; and a repeating module, arranged to repeatedly judge whether a distance between the Nth touch point and the first touch point in the N updated touch points is smaller than the second predetermined threshold value, and determine that the slide operation is stopped when the distance is judged to be smaller than the second predetermined threshold value.

On another aspect of the present invention, a terminal is further provided, which includes the device in any one of the abovementioned items.

According to the present invention, touch point 1 on the touch screen is detected; the operation on the touch screen is determined to be the slide from the touch point 1 to touch point 2, herein the distance between the touch point 2 and the touch point 1 exceeds the first predetermined threshold value; and one or more touch points 3 positioned on the slide path from the touch point 1 to the touch point 2 are reported, herein a distance/distances between the touch point/points 3 and the touch point 1 is/are smaller than the first predetermined threshold value. Therefore, a shake point which is generated due to non-actual-touch can be effectively filtered. Moreover, when touch point 2 outside an anti-shake range is detected, the touch points on a slide trajectory between the touch point 1 and the touch point 2 are sequentially reported, and a generated touch point which is not on the slide trajectory will not be reported again, so that smooth transition from the touch point 1 to the touch point 2 is implemented, and user experiences are effectively improved.

### Brief Description of Drawings

The drawings described here are used to provide a further understanding to the present invention, and form a part of the present invention. Schematic embodiments of the present invention and descriptions thereof are used to explain the present invention and not intended to form improper limits to the present invention. In the drawings:
FIG. 1 is a flowchart of a processing method for a touch point on a touch screen according to an embodiment of the present invention;
FIG. 2 is a structure block diagram of a processing device for a touch point on a touch screen according to an embodiment of the present invention;
FIG. 3 is a first alternative structure block diagram of a determination module 24 in the processing device for a touch point on a touch screen according to an embodiment of the present invention;
FIG. 4 is an alternative structure block diagram of a reporting module 26 in the processing device for a touch point on a touch screen according to an embodiment of the present invention;
FIG. 5 is a second alternative structure block diagram of a determination module 24 in the processing device for a touch point on a touch screen according to an embodiment of the present invention;
FIG. 6 is a first alternative structure block diagram of a processing device for a touch point on a touch screen according to an embodiment of the present invention;
FIG. 7 is a second alternative structure block diagram of a processing device for a touch point on a touch screen according to an embodiment of the present invention;
FIG. 8 is a structure diagram of a terminal according to an embodiment of the present invention;
FIG. 9 is a structure diagram of a touch screen terminal equipment according to an alternative implementation mode of the present invention; and
FIG. 10 is a flowchart of an anti-shake and smooth transition method for a touch screen according to an alternative implementation mode of the present invention.

### Preferred Embodiments of the Invention

The present invention will be described below with reference to the drawings and in combination with embodiments in detail. It should be noted that the embodiments in the application and characteristics in the embodiments may be combined mutually under the condition of no conflicts.

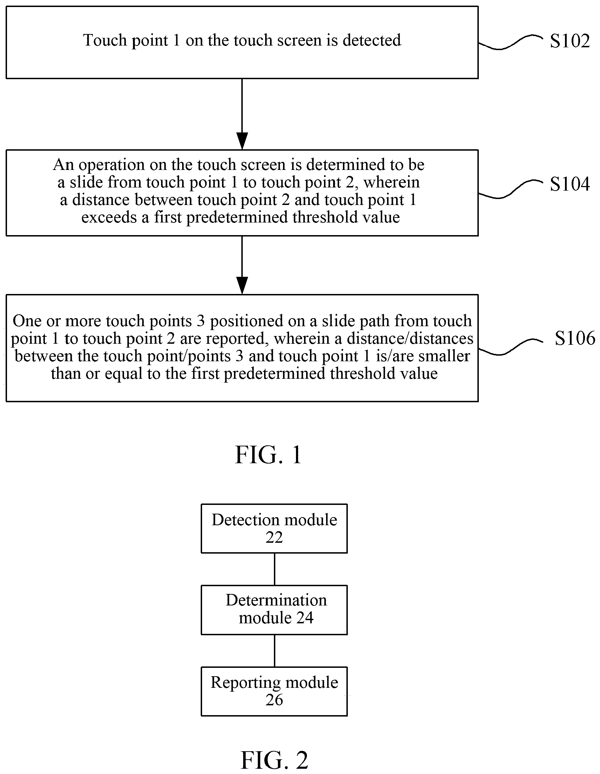

An embodiment of the present invention provides a processing method for a touch point on a touch screen. FIG. 1 is a flowchart of a processing method for a touch point on a touch screen according to an embodiment of the present invention. As shown in FIG. 1, the procedure includes the following steps.

In step S102, touch point 1 on the touch screen is detected.

In step S104, an operation on the touch screen is determined to be a slide from the touch point 1 to touch point 2, herein a distance between the touch point 2 and the touch point 1 exceeds a first predetermined threshold value.

In step S106, one or more touch points 3 positioned on a slide path from the touch point 1 to the touch point 2 are reported, herein a distance/distances between the touch point/points 3 and the touch point 1 is/are smaller than the first predetermined threshold value.

By the above steps, anti-shake processing is performed on the touch screen by virtue of an anti-shake algorithm that whether a distance between touch points exceeds a predetermine threshold value is judged. Considering an impacted touch effect due to interference of applications of a terminal, such as a charger and an LCD and the like, to a touch on the touch screen, shake generated by touching the touch screen and jumps between touch points in a related art, the abovementioned processing is adopted. In the abovementioned processing, a shake point which is generated due to non-actual-touch can be effectively filtered; and moreover, when touch point 2 outside an anti-shake range is detected, the touch points on a slide trajectory between the touch point 1 and the touch point 2 are sequentially reported, and a generated touch point which is not on the slide trajectory will not be reported again, so that smooth transition from the touch point 1 to the touch point 2 is implemented, and user experiences are effectively improved.

Alternatively, multiple processing manners may be adopted when the operation on the touch screen is determined to be the slide from the touch point 1 to the touch point 2. For example, the following simpler processing manner may be adopted. Whether a distance/distances between one or more touch points after touch point 1 and touch point 1 exceeds/exceed the first predetermined threshold value is sequentially judged. The one or more touch points are sequentially stored when a judgment result is NO. That is, the one or more touch points are temporally determined to be a shake point/points since a touch point generated on the slide path between touch point 1 and a non-shake point may be generated by an actual slide. These shake points within a first predetermined threshold value range are reserved, and a predetermined reservation number may be M. When the number exceeds M, new shake points are added, old shake points are removed. When the distance between a first touch point (i.e. the non-shake point) and touch point 1 is judged to exceed the first predetermined threshold value, the first touch point is determined to be the touch point 2, and the operation on the touch screen is determined to be the slide from touch point 1 to touch point 2. It should be noted that the above mentioned first predetermined threshold value may be different according to different practical conditions. For example, the practical conditions include a size of the touch screen and sensitivity of the touch screen and the like.

When one or more touch points 3 positioned on the slide path from touch point 1 to touch point 2 are reported, the following processing may be adopted. One or more touch points 3 are determined from the one or more touch points which are sequentially stored according to the slide path from touch point 1 to touch point 2. That is, other touch points on the slide path from touch point 1 to the non-shake point are reserved. The determined one or more touch points 3 are sequentially reported, that is, their coordinates are reported. Before a coordinate of the non-shake point (i.e. touch point 2) is reported, the coordinates of the reserved touch points on the slide path from touch point 1 to the non-shake point are reported, so that the slide on the touch screen has an obvious smooth transition, and does not show as a sudden jump from one point to another point.

For completely reducing power consumption of a terminal, namely application of the terminal is reduced as much as possible under the condition of unnecessary consumption. For example, after the step that the operation on the touch screen is determined to be the slide from touch point 1 to touch point 2, the method further includes that: a judgment about whether a distance between a touch point after touch point 2 and touch point 1 exceeds the first predetermined threshold value is stopped, that is, the anti-shake algorithm is disabled to reduce application of the terminal and effectively reduce the power consumption of the terminal.

In addition, after the step that the operation on the touch screen is determined to be the slide from touch point 1 to touch point 2, the method further includes how to determine the ending of the slide operation. There may also be multiple determination manners, and a simpler implementation manner is provided here. One or more touch points which are detected after touch point 2 are sequentially stored at first. Whether the number of the stored touch points reaches a predetermined number N is judged. Whether a distance between a last touch point and a first touch point in the N stored touch points is smaller than a second predetermined threshold value is judged under the condition that a judgment result is YES. It is determined that the slide is stopped at the Nth stored touch point under the condition that the distance is smaller than the second predetermined threshold value.

Under the condition that the distance between the last touch point and the first touch point in the N stored touch points is judged to be not smaller than the second predetermined threshold value, the method further includes that the following steps. The N stored touch points are updated. Herein, N updated touch points are formed by covering the first touch point in the N stored touch points by sequential shift at first and then adding a touch point generated after the Nth touch point. Whether a distance between the Nth touch point and the first touch point in the N updated touch points is smaller than the second predetermined threshold value is repeatedly judged. It is determined that the slide operation is stopped when the distance is determined to be smaller than the second predetermined threshold value. After it is determined that the slide is stopped, the anti-shake algorithm (i.e. the abovementioned judgment processing) is enabled again. The effects that the anti-shake algorithm is disabled when unnecessary and enabled when necessary are achieved.

The embodiment of the present invention further provides a processing device for a touch point on a touch screen. The device is arranged to implement the abovementioned embodiments and alternative implementation modes, and what has been described will not be elaborated repeatedly. For example, term "module", used below, may be a combination of software and/or hardware implementing a preset function. Although the device described in the following embodiments is alternatively implemented with software, implementation with hardware or a combination of software and hardware is also possible and conceivable.

FIG. 2 is a structure block diagram of a processing device for a touch point on a touch screen according to an embodiment of the present invention. As shown in FIG. 2, the device includes a detection module 22, a determination module 24 and a reporting module 26. The device will be described below.

The detection module 22 is arranged to detect touch point 1 on the touch screen. The determination module 24 is connected to the abovementioned detection module 22, and is arranged to determine an operation on the touch screen to be a slide from touch point 1 to touch point 2, herein a distance between touch point 2 and touch point 1 exceeds a first predetermined threshold value. The reporting module 26 is connected to the abovementioned determination module 24, and is arranged to report one or more touch points 3 positioned on a slide path from touch point 1 to touch point 2, herein a distance/distances between the touch point/points 3 and the touch point 1 is/are smaller than the first predetermined threshold value.

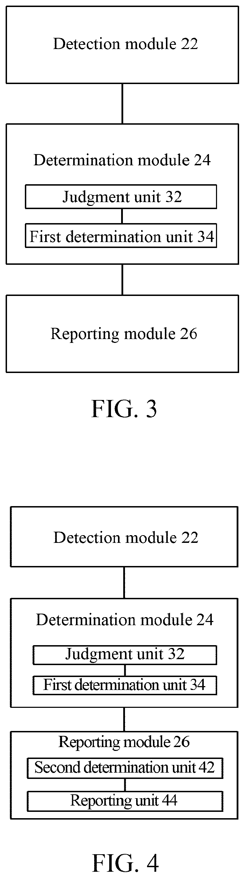

FIG. 3 is a first alternative structure block diagram of a determination module 24 in a processing device for a touch point on a touch screen according to an embodiment of the present invention. As shown in FIG. 3, the determination module 24 includes a judgment unit 32 and a first determination unit 34. The determination module 24 will be described below.

The judgment unit 32 is arranged to sequentially judge whether a distance/distances between one or more touch points after touch point 1 and touch point 1 exceeds/exceeds the first predetermined threshold value. The first determination unit 34 is connected to the judgment unit 32, and is arranged to sequentially store the one or more touch points when a judgment result is NO., and when the distance between a first touch point and touch point 1 exceeds the first predetermined threshold value is judged, determine the first touch point to be touch point 2, and determine the operation on the touch screen to be the slide from touch point 1 to touch point 2.

FIG. 4 is an alternative structure block diagram of a reporting module 26 in a processing device for a touch point on a touch screen according to an embodiment of the present invention. As shown in FIG. 4, the reporting module 26 includes a second determination unit 42 and a reporting unit 44. The reporting module 26 will be described below.

The second determination unit 42 is arranged to determine one or more touch points 3 from the one or more touch points which are sequentially stored according to the slide path from touch point 1 to touch point 2. The reporting unit 44 is connected to the second determination unit 42, and is arranged to sequentially report the determined one or more touch points 3.

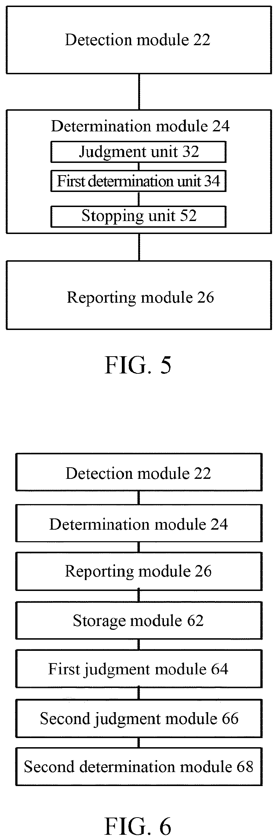

FIG. 5 is a second alternative structure block diagram of a determination module 24 in a processing device for a touch point on a touch screen according to an embodiment of the present invention. As shown in FIG. 5, the determination module 24 further, besides the units shown in FIG. 3, includes: a stopping unit 52. The stopping unit 52 will be described below.

The stopping unit 52 is connected to the first determination unit 34, and is arranged to stop a judgment about whether a distance between a touch point after touch point 2 and touch point 1 exceeds the first predetermined threshold value.

FIG. 6 is a first alternative structure block diagram of a processing device for a touch point on a touch screen according to an embodiment of the present invention. As shown in FIG. 6, the device further, besides all the modules shown in FIG. 2, includes a storage module 62, a first judgment module 64, a second judgment module 66 and a second determination module 68. The device will be described below.

The storage module 62 is connected to the reporting module 26, and is arranged to sequentially store one or more touch points which are detected after touch point 2. The first judgment module 64 is connected to the storage module 62, and is arranged to judge whether the number of the stored touch points reaches a predetermined number N. The second judgment module 66 is connected to the first judgment module 64, and is arranged to judge whether a distance between the last touch point and the first touch point in the N stored touch points is smaller than a second predetermined threshold value under the condition that a judgment result of the first judgment module 64 is YES. The second determination module 68 is connected to the second judgment module 66, and is arranged to determine that the slide is stopped at the Nth stored touch point under the condition that a judgment result of the second judgment module 66 indicates that the distance is smaller than the second predetermined threshold value.

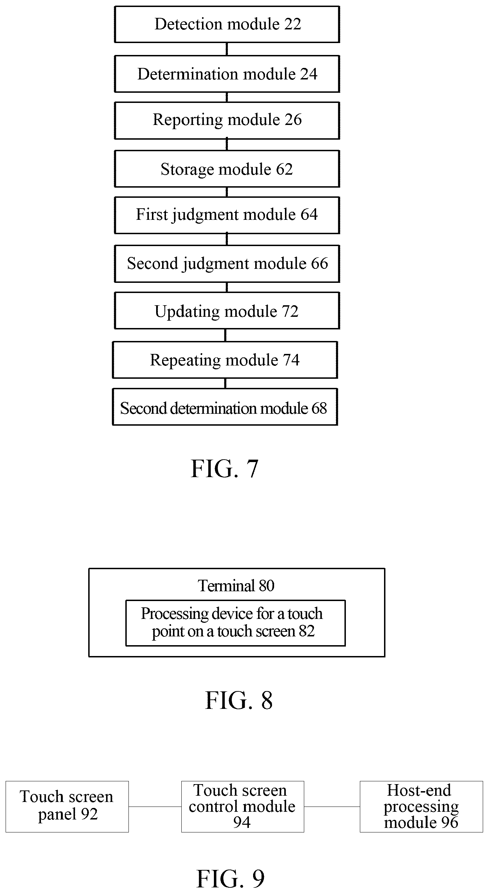

FIG. 7 is a second alternative structure block diagram of a processing device for a touch point on a touch screen according to an embodiment of the present invention. As shown in FIG. 7, the device further, besides all the modules shown in FIG. 6, includes an updating module 72 and a repeating module 74. The alternative structure will be described below.

The updating module 72 is connected to the second judgment module 66, and is arranged to, under the condition that the distance between the last touch point and the first touch point in the N stored touch points is determined to be not smaller than the second predetermined threshold value, update the N stored touch points. Herein, the N updated touch points are formed by deleting the first touch point in the N stored touch points and then adding a touch point generated after the Nth touch point. The repeating module 74 is connected to the abovementioned updating module 72 and the second determination module 68, and is arranged to repeatedly judge whether a distance between the Nth touch point and the first touch point in the N updated touch points is smaller than the second predetermined threshold value, and determine that the slide operation is stopped when the distance is judged to be smaller than the second predetermined threshold value.

The embodiment of the present invention further provides a terminal, and FIG. 8 is a structure diagram of a terminal according to an embodiment of the present invention. As shown in FIG. 8, the terminal 80 includes the processing device for a touch point on a touch screen 82 in any one of the abovementioned items.

Aiming at the shake of a touch screen of a terminal equipment in the related art, the embodiment of the present invention provides a method for anti-shake operation on a touch screen and smooth transition in a process of a finger from a still state to a slide. In order to implement the anti-shake operation and the smooth transition of the slide process, the method is implemented by the following architectures. FIG. 9 is a structure diagram of touch screen terminal equipment according to an alternative implementation mode of the present invention. As shown in FIG. 9, the terminal equipment includes a touch screen panel 92, a touch screen control module 94 and a host-end processing module 96. The terminal equipment will be described below.

The touch screen panel 92 may induce a conductor such as a finger and the like after being started.

The touch screen control module 94 is connected to the abovementioned touch screen panel 92, and screen touch driving and various corresponding algorithms are implemented in the module. The module is arranged to control to scan the touch screen panel, convert scanned analogue data into a digital signal, calculate a coordinate of a touch point, and notify a host to read related data. A related algorithm in the present invention may also be implemented in the sub-module.

The host-end processing module 96 is connected to the abovementioned touch screen control module 94, and is arranged to acquire the coordinate of the touch point from the touch screen control module, and further process the data to achieve a certain functional effect.

On the basis of the modules, the anti-shake and smooth transition method for the touch screen substantially includes the following steps.

In step S1, an anti-shake algorithm is enabled, and an anti-shake threshold value L1 and the number M of touch points to be stored are set, and a coordinate of the first touch point is obtained and stored as pre_x, pre_y respectively;

In step S2, a coordinate of the next touch point is continued to be sensed, and a distance d1 between the point and the origin (pre_x, pre_y) is calculated. If d1 is within the threshold value L1, it is indicated that the point may be generated due to the shake. The point is temporally considered as an invalid point and is stored. The coordinate (pre_x, pre_y) of the origin is reported, and the step S2 is repeated.

In step S3, if a distance between a touch point sensed at this time and the origin exceeds the threshold value L1, it is indicated that the point is generated due to non-shake, and is a valid point, and is generated due to a process of the finger from a still click to a slide. At first points with more intensive shakes are eliminated from stored points which are temporally considered to be invalid, and points within a slide path from the origin to the valid point are reserved, and are reported according to a practical touch sequence. A coordinate of the valid touch point is reported after the points within a slide path from the origin to the valid point are reported, and the anti-shake algorithm is disabled.

In step S4, the next touch point is continued to be sensed, whose coordinate is stored into buf2 and is reported.

In step S5, the step S4 is repeated, and whether a distance between a reserved Nth touch point and a first touch point is within a threshold value L2 is calculated if the number of coordinates stored in buf2 exceeds N. The step S4 is continued to be repeated if the distance is not within the threshold value L2. If the distance is within the threshold value L2, it is indicated that a user stops the slide, and the anti-shake algorithm is enabled, and the Step S1 is executed.

Through the abovementioned embodiments and alternative implementation modes, an anti-shake effect of the touch screen may be effectively achieved; moreover, the smooth transition in the process of the finger from the still state to the slide is implemented without point jumps, so that user experiences are well improved.

The alternative implementation mode of the present invention will be described below with reference to the drawing.

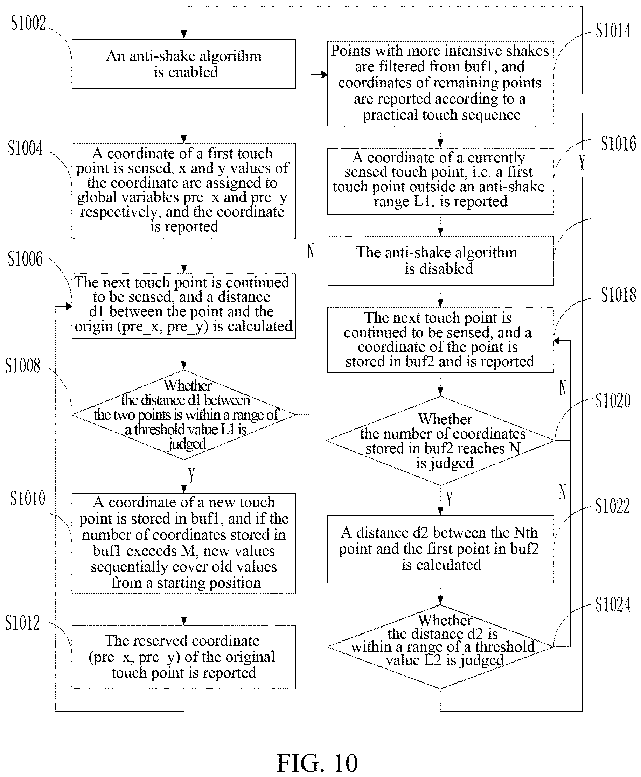

FIG. 10 is a flowchart of an anti-shake and smooth transition method for a touch screen according to an alternative implementation mode of the present invention. As shown in FIG. 10, the method includes the following steps.

In step S1002, an anti-shake algorithm is enabled, herein the anti-shake algorithm may be enabled when a finger is still after a first touch or slide.

In step S1004, a coordinate of a first touch point is sensed, x and y values of the coordinate are assigned to global variables pre_x and pre_y respectively, and the coordinate of the touch point is reported. Herein, (pre_x, pre_y) is determined as a coordinate of an origin, and is used for judging whether subsequent touch points are within an anti-shake range.

In step S1006, the next touch point is continued to be sensed, and a distance d1 between the point and the origin (pre_x, pre_y) is calculated.

In step S1008, whether the distance d1 between the two points is within a range of a threshold value L1 is judged. Herein, d1 is compared to L1. It is indicated that the point is within the anti-shake range if d1≤L1, otherwise it is indicated that the point has exceeded the anti-shake range.

In step S1010, if the touch point is within the anti-shake range, a coordinate of the point is stored in buf1. If the number of coordinates stored in buf1 exceeds M, new values are stored from a starting position of buf1 in a manner of sequentially covering old values.

In step S1012, if the point is determined to be within the anti-shake range, the point is temporally considered as an invalid point. The reserved coordinate (pre_x, pre_y) of the original point is reported, and step S1006 is repeated.

In step S1014, if the point has exceeded the anti-shake range, points with more intensive shakes are filtered from buf1, and coordinates of touch points on a slide path from the origin and the point are reserved and are reported according to a practical touch sequence. Those reported points are theoretically points generated by the slide of the finger in the anti-shake range.

In step S1016, after a part of the reserved points within the anti-shake range are reported, a coordinate of a currently sensed touch point, i.e. a first touch point outside the anti-shake range L1 is reported.

In step S1018, the anti-shake algorithm is disabled, and at this moment, the finger has transitioned from a still state to a slide state.

In step S1020, the next touch point is continued to be sensed, whose coordinate is stored in buf2, and is reported. At the moment, the finger is in the slide process, and the coordinate is stored for judging whether the finger is switched from the slide state to the still state. Whether the number of coordinates stored in buf2 reaches N is judged.

In step S1022, if the number of points stored in buf2 reaches N, a distance d2 between the Nth point and first point in buf2 is calculated.

In step S1024, whether the distance d2 is within a range of a threshold value L2 is judged. If d2>L2, it is indicated that the finger is still in the slide state, and the step S1020 will be repeated. If d2≤L2, it is indicated that the finger is switched from the slide state to the still state, and the anti-shake algorithm is re-enabled.

Through the abovementioned embodiments and alternative implementation modes, a good anti-shake effect may be effectively achieved; moreover, the smooth transition in the process of the finger of a user from the still state to the slide is implemented, so that the user may feel smoother, and user experiences are improved.

Obviously, those skilled in the art should know that each module or each step of the present invention may be implemented by a universal computing device, and the modules or steps may be concentrated on a single computing device or distributed on a network formed by a plurality of computing devices. Alternatively, they may be implemented by program codes executable for the computing devices, so that the modules or steps may be stored in a storage device for execution with the computing devices, the shown or described steps may be executed in sequences different from those described here in some circumstances, or may form each integrated circuit module respectively, or multiple modules or steps therein may form a single integrated circuit module for implementation. As a consequence, the present invention is not limited to the combination of any specific hardware and software.

The above is only the alternative embodiment of the present invention and not intended to limit the present invention. For those skilled in the art, the present invention may have various modifications and variations. Any modifications, equivalent replacements, improvements and the like within the rule and principle of the present invention shall fall within the scope of protection of the present invention.

### Industrial Applicability

According to the processing method and device for a touch point on a touch screen and terminal provided by the embodiment of the present invention, touch point 1 on the touch screen is detected at first, and then the slide from touch point 1 to touch point 2 is judged. If the distance between touch point 2 and touch point 1 exceeds the first predetermined threshold value, one or more touch points 3 positioned on the slide path from touch point 1 to touch point 2 are reported, herein a distance/distances between the touch point/points 3 and the touch point 1 is/are smaller than the first predetermined threshold value. According to the embodiment of the present invention, a shake point which is generated due to non-actual-touch may be effectively filtered, and moreover, smooth transition from touch point 1 to touch point 2 may be implemented, therefore user experiences are effectively improved.

## Claims

1. A processing method for a touch point on a touch screen, comprising:
detecting touch point 1 on the touch screen;
determining an operation on the touch screen to be a slide from the touch point 1 to touch point 2, wherein a distance between the touch point 2 and the touch point 1 exceeds a first predetermined threshold value; and
reporting one or more touch points 3 positioned on a slide path from the touch point 1 to the touch point 2, wherein a distance/distances between the touch point/points 3 and touch point 1 is/are smaller than or equal to the first predetermined threshold value.

2. The method according to claim 1, wherein said determining an operation on the touch screen to be a slide from the touch point 1 to touch point 2 comprises:
sequentially judging whether a distance/distances between one or more touch points after the touch point 1 and the touch point 1 exceeds/exceed the first predetermined threshold value; and
storing the one or more touch points when a judgment result is NO, and when the distance between a first touch point and touch point 1 is judged to exceed the first predetermined threshold value, determining the first touch point to be the touch point 2, and determining the operation on the touch screen to be the slide from the touch point 1 to the touch point 2.

3. The method according to claim 1 or 2, wherein said reporting one or more touch points 3 positioned on a slide path from the touch point 1 to the touch point 2 comprises:
determining the one or more touch points 3 from the one or more touch points which are sequentially stored according to the slide path from the touch point 1 to the touch point 2; and
sequentially reporting the determined one or more touch points 3.

4. The method according to claim 1 or 2, wherein, after determining the operation on the touch screen to be the slide from the touch point 1 to the touch point 2, the method further comprises:
stopping a judgment about whether a distance between a touch point after the touch point 2 and the touch point 1 exceeds the first predetermined threshold value.

5. The method according to claim 1, wherein, after determining the operation on the touch screen to be the slide from the touch point 1 to the touch point 2, the method further comprises:
sequentially storing one or more touch points which are detected after the touch point 2;
judging whether a number of the stored touch points reaches a predetermined number N;
judging whether a distance between an Nth stored touch point and a first stored touch point is smaller than a second predetermined threshold value when the number of the stored touch points reaches the predetermined number N; and
determining that the slide is stopped at the Nth stored touch point when the distance between the Nth stored touch point and the first stored touch point is smaller than or equal to the second predetermined threshold value.

6. The method according to claim 5, wherein, when the distance between the Nth stored touch point and the first stored touch point is greater than the second predetermined threshold value, the method further comprises:
updating N stored touch points, wherein N updated touch points are formed by covering the first touch point in the N stored touch points by sequential shift at first and then adding a touch point generated after the Nth touch point; and
repeatedly judging whether a distance between the Nth touch point and first touch point in the N updated touch points is smaller than the second predetermined threshold value, and determining that the slide operation is stopped when the distance is judged to be smaller than or equal to the second predetermined threshold value.

7. A processing device for a touch point on a touch screen, comprising:
a detection module, arranged to detect touch point 1 on the touch screen;
a determination module, arranged to determine an operation on the touch screen to be a slide from the touch point 1 to touch point 2, wherein a distance between the touch point 2 and the touch point 1 exceeds a first predetermined threshold value; and
a reporting module, arranged to report one or more touch points 3 positioned on a slide path from the touch point 1 to the touch point 2, wherein a distance/distances between the touch point/points 3 and the touch point 1 is/are smaller than the first predetermined threshold value.

8. The device according to claim 7, wherein the determination module further comprises:
a judgment unit, arranged to sequentially judge whether a distance/distances between one or more touch points after the touch point 1 and the touch point 1 exceeds/exceed the first predetermined threshold value; and
a first determination unit, arranged to sequentially store the one or more touch points when a judgment result of the judgment unit is NO, and when the judgment unit judges that the distance between a first touch point and the touch point 1 exceeds the first predetermined threshold value, determine the first touch point to be the touch point 2, and determine the operation on the touch screen to be the slide from the touch point 1 to the touch point 2.

9. The device according to claim 7 or 8, wherein the reporting module comprises:
a second determination unit, arranged to determine the one or more touch points 3 from the one or more touch points which are sequentially stored according to the slide path from the touch point 1 to the touch point 2; and
a reporting unit, arranged to sequentially report the determined one or more touch points 3.

10. The device according to claim 7 or 8, wherein the determination module further comprises:
a stopping unit, arranged to stop a judgment about whether a distance between a touch point after the touch point 2 and the touch point 1 exceeds the first predetermined threshold value.

11. The device according to claim 7, further comprising:
a storage module, arranged to sequentially store one or more touch points which are detected after the touch point 2;
a first judgment module, arranged to judge whether a number of the stored touch points reaches a predetermined number N;
a second judgment module, arranged to judge whether a distance between a last touch point and a first touch point in the N stored touch points is smaller than a second predetermined threshold value under a condition that a judgment result of the first judgment module is YES; and
a second determination module, arranged to determine that the slide is stopped at the Nth stored touch point under a condition that a judgment result of the second judgment module indicates that the distance is smaller than or equal to the second predetermined threshold value.

12. The device according to claim 11, wherein the device further comprises:
an updating module, arranged to, under a condition that the distance between the last touch point and the first touch point in the N stored touch points is judged to be greater than the second predetermined threshold value, update the N stored touch points, wherein N updated touch points are formed by covering the first touch point in the N stored touch points by sequential shift at first and then adding a touch point generated after the Nth touch point; and
a repeating module, arranged to repeatedly judge whether a distance between the Nth touch point and the first touch point in the N updated touch points is smaller than or equal to the second predetermined threshold value, and determine that the slide operation is stopped when the distance is judged to be smaller than or equal to the second predetermined threshold value.

13. A terminal, comprising the device according to any one of claims 7-12.
